Europäisches Patentamt

European Patent Office

Office européen des brevets

(11) Publication number: **0 246 001**
A2

# EUROPEAN PATENT APPLICATION

(21) Application number: **87303822.8**

(22) Date of filing: **29.04.87**

(51) Int. Cl.³: **B 65 G 47/68**
**B 65 G 51/03**

(30) Priority: **13.05.86 US 862708**
**16.10.86 US 919371**
**04.12.86 US 938037**

(43) Date of publication of application:
**19.11.87 Bulletin 87/47**

(84) Designated Contracting States:
**BE DE FR GB IT NL**

(71) Applicant: **PRECISION METAL FABRICATORS, INC.**
6105 West 55th Avenue
Arvada Colorado 80002(US)

(72) Inventor: **Lenhart, Ronald A.**
2520 Van Gordon Street
Lakewood Colorado 80215(US)

(74) Representative: **Corin, Christopher John et al,**
Mathisen Macara & Co. The Coach House 6-8 Swakeleys
Road
Ickenham Uxbridge UB10 8BZ(GB)

(54) Shock absorbant single filer.

(57) In apparatus for re-arranging articles (10) in a single file, multiple rows of cylindrical articles are brought into an alignment zone, merged into an equilateral triangular configuration with mutually touching side edges within the alignment zone and accelerated into a high pressure buffer section (A) of the alignment zone where they are separated from each other and thereafter converged into single file.

The buffer section (A) eliminates the possibility of transmission of upstream forces through the single file apparatus due to engagement of the single file articles by downstream equipment. In one embodiment, the imperforate sidewalls (280,282) in the buffer section slope downwardly away from an imperforate top cover (256) to provide progressive relief of air pressure within the buffer section.

In another embodiment, the imperforate sidewalls (248,250) have an upper edge which is contiguous with a top cover which is in the form of a plenum (256) having rows of jet openings (260) positioned above the jet openings (94) in the air table. The imperforate sidewalls extend downstream to a point where the air buffer zone is less than two article diameters in width. The articles provide a self-valving action wherein the most downstream article moves away from the imperforate sidewall (248) on one side and relieves the air pressure so that the next upstream article moves downstream. In another embodiment, the top cover (296) is imperforate except for the downstream end which has a plurality of rows of apertures (294) for progressively relieving the static pressure as the articles sequentially pass the apertures.

Fig_17

This invention relates to a method of and apparatus for moving a mass of empty beverage containers into single file and more particularly to a device for handling highly-etched containers which do not easily slide or rotate relative to each other.

There are many occasions within a can manufacturing plant in which a mass of containers needs to be fed into a single line or multiple single lines for supplying the containers to decorators, base coaters and other apparatus in the plant which must perform an operation on or with respect to the container. As the development of higher speed apparatus for performing all these functions is developed, it becomes necessary to develop apparatus for providing the containers to the equipment at higher speeds. Until fairly recently, single filing was done by a variety of mechanical single filers. However, more recently a significant breakthrough in the handling of containers occurred with the development of air conveyors and single filing apparatus which support the containers on a layer of air and use air as a propelling force for manipulating and moving the containers.

One such single filing apparatus is disclosed in US-A 4 462 720 for "Air Table System" which issued on July 31, 1984. In this apparatus, the containers are supported on a table by a layer of air provided by air jets slanted in the downstream direction toward a single file conveying zone. An imperforate cover is placed above the surface of the table a distance slightly greater than the longitudinal dimension of the objects being transported and is positioned over at least a portion of the single file conveying zone. Blow-back jets are connected to a source of air under pressure for supplying air in the single file conveying zone in opposition to the direction of normal flow of the object. By the use of this apparatus, a mass of containers can be rearranged into a single file arrangement for discharge at the downstream end of the table.

Another single filer is shown in US-A 4 561 806 for "Vertical Single Filer Conveyor System" which was granted December 31, 1985. In this apparatus, the containers are fed from a mass onto a table which has at least three zones extending from an upstream location. The containers are supported and moved by a prearranged pattern of flotation air jets. In addition, a row of acceleration jets, which are larger in size than the flotation jets, are located in the table adjacent to and spaced in parallel relation to converging sides of the table to form two converging rows of acceleration jets. Means is provided to increase progressively the volume and velocity of air through the acceleration jets between each of the three zones from the upstream location to the downstream location to accelerate and longitudinally separate the objects as they move along the table from the upstream location to the downstream location so that the converging of the sides coacts with the acceleration jets to converge the longitudinally separated objects in a prearranged pattern to bring them into single file. This apparatus has been found to be very satisfactory for placing smooth decorated cans in single file at relatively high speeds.

Neither apparatus will work with highly etched containers. During the manufacturing process, the containers are run through an acid wash which etches the outer surface of the containers so that the decorative coating will adhere to the surface of the container. Furthermore, because of environmental concerns, the acid cannot now freely be dumped and therefore it is impossible to control the amount of etching on the cans as was previously possible. In other words, the acid solution must be strong enough to provide the minimum etching required but if there is a stall in the line and the container stays in the etching solution too long, the acid cannot be dumped but rather the container just becomes more highly etched. This creates great problems in manipulating the containers because the adjacent contacting edges of the etched containers act like little gear teeth and interlock with each other so that the containers want to rotate with each other rather than moving individually and sliding past each other.

According to the present invention there is provided a shock absorbant single filer for the transport of upright, cylindrical articles from a multiple row arrangement at an upstream location to a single file arrangement at a downstream location and providing a shock absorbant buffer zone between the upstream location and the downstream location, the single filer being characterized by a table extending from said upstream location to said downstream location, having a surface, side edges and an underside with a prearranged pattern of flotation air jets, the air jets being arranged in rows spaced laterally inward from the side edges, slanted in a downstream direction and communicating the surface and the underside of the table, a plenum connectable to a source of air under pressure and attached to the underside of the table surface, means at the upstream location for supplying articles to the buffer zone in two contiguous nested rows wherein the containers form an equilateral triangular configuration with the surfaces of all adjacent articles in contact with each other, converging imperforate side walls extending along said table through at least a part of the buffer zone to reduce the articles from a two article width at the upstream location to single file adjacent the downstream location, cover means over the buffer zone serving to create a high pressure area within the buffer zone to facilitate separation of the articles therein, means for selectively decreasing the air pressure from a point spaced downstream from the upstream location to the downstream location, and acceleration jets in the table along said buffer zone for accelerating the articles so that they can be converged by the side walls into single file as they are re-arranged from the contiguous triangular configuration.

Apparatus embodying the invention will now be described, by way of example, with reference to the accompanying diagrammatic drawings, in which:

Figure 1 is a perspective view of a single filer constructed in accordance with this invention;

Figure 2 is a section, to an enlarged scale, taken along line 2-2 of Figure 1, showing a plenum arrangement for an air table upstream of the single filer;

Figure 3 is a section, to an enlarged scale, taken along line 3-3 of Figure 1, showing the plenum arrangement in

0246001

the single file zone downstream of the single filer;

Figure 4 is a side elevation of the single filer of Figure 1;

Figure 5 is a plan view of the single filer of Figure 4;

Figure 6 is an exploded perspective view of the first three zones of the single filer, with parts broken away for clarity of illustration;

Figure 7 is a top plan view, to an enlarged scale, of the air table of the single filer showing the arrangement of air jet openings and indicating the movement of containers;

Figure 8 is a section, to an enlarged scale, taken along line 8-8 of Figure 4, showing details of the upper and lower air plenums;

Figure 9 is a section, taken along line 9-9 of Figure 4, showing further details of the upper plenums;

Figure 10 is a section, to an enlarged scale, taken along line 10-10 of Figure 8, showing the angles of the upper and lower driving jets and indicating the movement of a container under the influence of air issuing from those air jets;

Figure 11 is a fragmentary perspective view, to an enlarged scale, of a buffer section of the single filer of Figure 1, with parts broken away for clarity of illustration;

Figure 12 is a side elevation of the buffer section of Figure 11;

Figure 13 is a section, to an enlarged scale, taken along line 13-13 of Figure 12 showing a portion of an alignment zone which allows the containers to separate from each other;

Figure 14 is a fragmentary perspective view of the first zone of the single filer of Figure 1 showing a tipped container being discharged between the side rails;

Figure 15 is a section taken along line 15-15 of Figure 14, showing a container as it is forced over the lower side rails;

Figure 16 shows the apparatus in accordance with the invention combined in multiple units;

Figure 17 is a fragmentary perspective view, to an enlarged scale of another form of buffer zone of the single filer;

Figure 18 is a fragmentary section, to an enlarged scale, taken along line 18-18 of Figure 17 showing the position of articles in the buffer zone during one phase of its operation;

Figure 19 is a section, taken along line 19-19 of Figure 18 showing details of the upper plenum;

Figure 20 is a fragmentary top plan view of a portion of the buffer zone showing the position of the articles in another phase of the operation of the apparatus;

Figure 21 is a fragmentary perspective view of still another form of buffer section having openings in a top cover with a sliding lid;

Figure 22 is a fragmentary top plan view, to an enlarged scale, of Figure 21 with the sliding lid omitted for clarity of illustration;

Figure 23 is a section, taken along line 23-23 of Figure 22, showing a jet board and top cover in cross section; and

Figure 24 is a fragmentary vertical section, to an enlarged scale, taken along line 24-24 of Figure 23, showing the spring detent mechanism for holding the sliding lid in adjusted position.

In accordance with this invention, a single filer is provided which receives highly etched containers en masse from an infeed table I and arranges them in single file for discharge into a single file zone S. The single filer includes at its upstream end a zone D in which the containers are arranged loosely in two spaced rows and fed to a transporting zone T wherein the containers in each row are forced into tight contiguous contact. The containers then move into a converging zone C wherein the rows are brought into close adjacency. The containers then feed into an alignment zone A having a nesting section where they are nested with each other and arranged in equilateral triangular contacting relationship. They then move into a high pressure buffer section where they are accelerated, separated, and then merged into single file. All of this is accomplished without subjecting the containers to substantial frictional contact which would inhibit rotation and sliding with respect to each other.

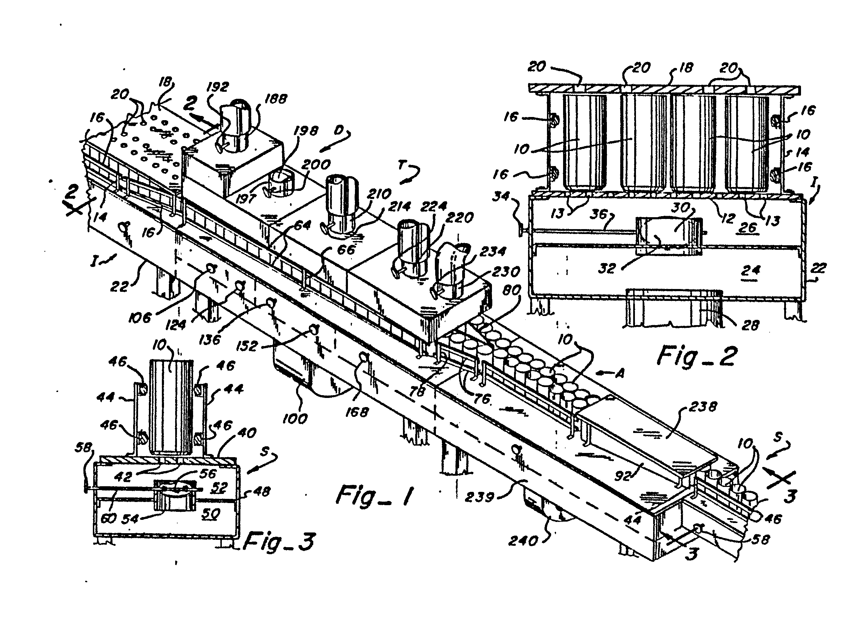

Containers 10 are supplied en masse along a table surface 12 of infeed table I, which surface has a pattern of air jet openings 13 for supporting and moving the containers toward the divergent air single filer. The infeed table I includes supports 14 on opposite sides thereof for vertically spaced guide rails 16, as best seen in Figure 2. A generally imperforate top cover 18 has spaced openings 20. The solid area between the openings creates high pressure areas for separating the containers into a loose mass as they are fed into the divergent single filer.

A plenum 22 is provided under table surface 12 and is divided into a lower supply chamber 24 and an upper portion 26, as shown in Figure 2. Air is supplied to the lower portion 24 through an inlet 28. This air in turn is supplied through a duct 30 having a damper 32 therein regulated from a control knob 34 connected to the damper by rod 36.

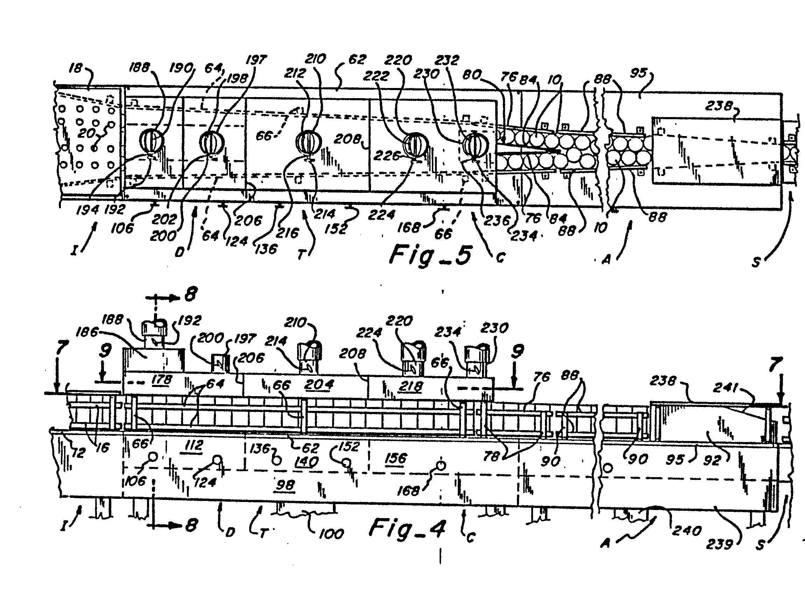

A similar structure is shown in Figure 3 for the single file zone S which includes a surface 40 having jet openings 42 for conveying the containers 10 to another station. Each container is held in aligned position by side guides 44 which includes spaced guide rails 46, as shown. The jet openings 42 communicate with a plenum 48 having a lower portion 50 and an upper portion 52 interconnected by duct 54. The duct 54 has a damper 56 which is controlled by a knob 58 connected thereto by a rod 60.

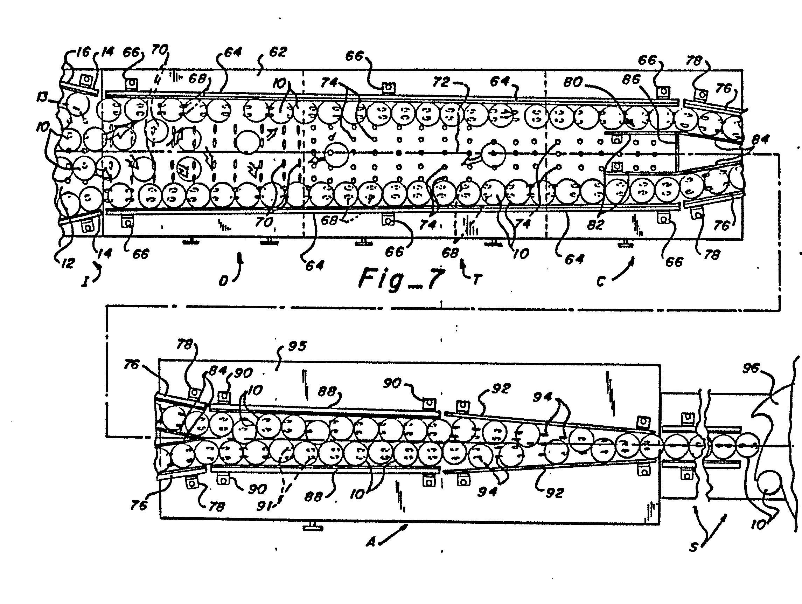

An overview of the operation of the apparatus of this invention can be had with reference to Figure 7. As seen in the upper left-hand portion of this Figure, the containers 10 are supplied en masse on air table 12, the containers being supported by air from jets 13 which also move the containers in the downstream direction. As previously mentioned with respect to Figure 2, the cover 18 together with openings 20 allows high pressure areas to form between the openings which cause the containers to be spread out across the table as they enter diverging zone D of the single filer. The single filer has a table surface 62 which extends across the single filer and the length of the diverging zone, the transporting zone and the converging zone. A pair of spaced guide rails 64 is provided on opposite sides of table surface 62 and are mounted on supporting brackets 66. These guide rails converge slightly from the upstream end to the downstream end and are spaced apart at the upstream end a distance at least greater than three container diameters but preferably slightly greater than four container diameters to accommodate the mass of containers from the infeed table I. Along each side, adjacent the inside edge of the guide rails, is a pair of spaced rows of driving jets 68 which may be angled in a downstream direction from the vertical at approximately 60° and may be 2.78 mm in diameter. In the diverging zone D and between the rows of driving jets 68 are diverging jets 70 which are angled approximately 45° from the vertical in opposite directions along centre line 72 of Figure 7, so as to cause containers in the central area to be moved toward the sides and into single file line over the driving jets 68. These diverging jets are conveniently approximately 1.98 mm in diameter.

In the centre portion of the divergent single filer in both transporting section T and converging section C there are vertical flotation jets 74 which may also be 1.98 mm in diameter. The air pressure in the central area will be higher at the downstream end than at the upstream end, as discussed in more detail below, so that any containers which enter this area will be caused to float upstream along a film of air created by flotation jets 74 until they are over diverging jets 70 whereupon they will be moved laterally back into single file with the other containers along the rail. At the upstream end, the containers are in a relatively loose formation so that spaces form along the side rails to allow containers moving into the centre from the infeed table I and any containers moving back upstream in the centre of the divergent single filer to enter into the spaces between the containers at this location. In the transfer zone, the jets exert a greater force on the containers and hold them in closely adjacent configuration so that a substantially closed high air pressure area is formed by the containers along the side rails and the imperforate cover.

As the separated rows of containers move into the converging section, they are diverted toward each other by spaced guide rails 76, supported by brackets 78, which bring the containers into close adjacency as they enter the nesting area of alignment zone A. At this position, there is a baffle device 80 which has spaced baffle walls 82 which are each spaced from the respective side rails 64 a distance slightly greater than one container diameter and are interconnected with converging baffle walls 84, which come together at the end of converging rails 76 and are parallel thereto. A cross baffle wall 86 extends between the spaced baffle walls at the point of juncture between walls 82 and 84 and helps define a high pressure area, as further discussed below. As best seen in Figure 7, the containers align themselves along spaced side rails 64 and away from solid baffle walls 82. Since some air can escape around and between the containers through spaced side rails 64, the air pressure is higher between the containers and solid baffle walls 82.

The closely adjacent rows of containers 10 are guided next into nesting relationship in the nesting section of alignment zone A by spaced guide rails 88 which are supported by brackets 90. These guide rails converge slightly in the downstream direction so as to bring the containers into a contiguous equilateral triangular configuration, as shown in Figure 7, at the downstream end of guide rails 88. The jets 91 between guide rails 88 can be vertical or angled forwardly at an angle between $5^\circ$ and $40^\circ$ to the vertical. Since there will be substantial force on these containers by the trailing containers which will hold them together, a strong driving force is not needed in this area. The purpose of the equilateral triangular configuration is to ensure that the containers are always in the same precise alignment so as they are rearranged into single file, their movement is predictable and no jamming of the containers will occur. This is true because with this alignment one container always moves ahead of the next so that jamming cannot occur.

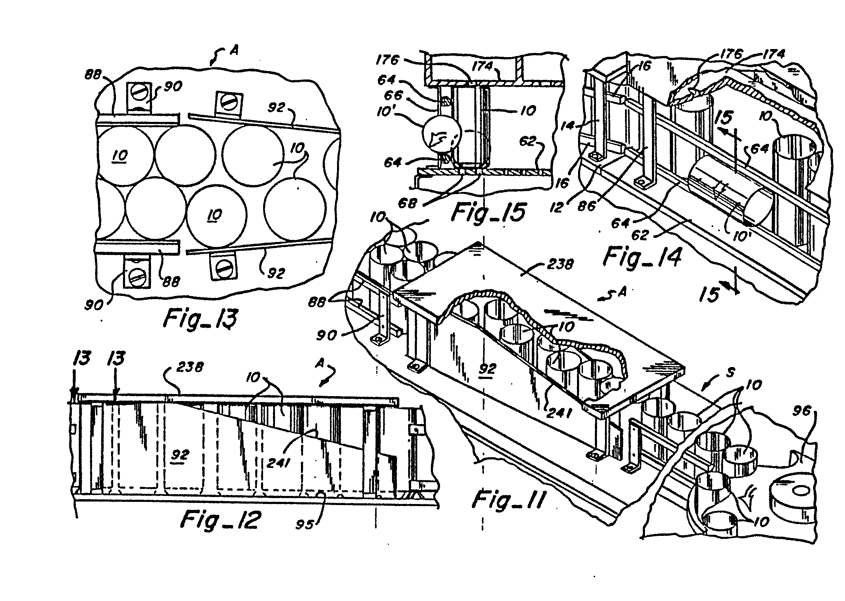

As the containers in the equilateral triangular configuration leave the downstream end of the guide rails 88, they enter a slightly wider area as defined by converging sidewalls 92 within the buffer section of alignment zone A. It will be noted, as best seen in Figure 13, that the sidewalls at their upstream end are displaced slightly further apart than the spacing between the inside of guides 88. The high pressure in this wider section causes the containers to separate laterally from each other as shown. Acceleration jets 94 in table surface 95 are at an angle between 20° and 60° to the vertical and have a diameter of 1.98 mm. These acceleration jets 94 accelerate the containers so that each container is separate from the other and is not in contiguous frictional contact with the others as the converging sidewalls bring them into single file alignment as they move into the single file zone S. The containers may move from the single file zone to any other station, such as to a decorator wheel 96 which sequentially picks up the containers from the single file line. It will be understood, as this decorator wheel engages a container its arm will give a slightly upstream movement to the next adjacent container which movement can be passed along through all of the containers. It would not be desirable to have this reverse motion passed upstream to the infeed table I and therefore, the spacing of the containers between converging sidewalls 92 provides an air buffer section, as discussed more fully below, so that this reverse movement of the single file containers is isolated from the containers which are upstream.

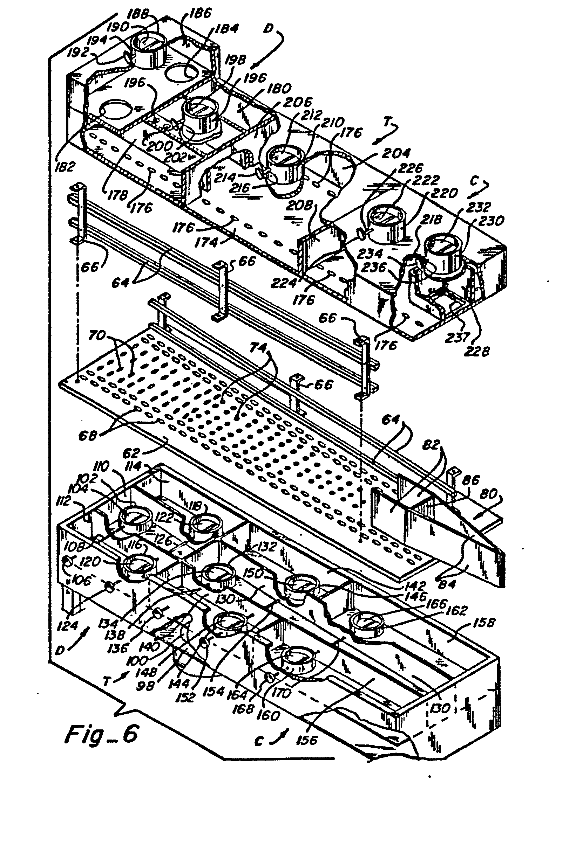

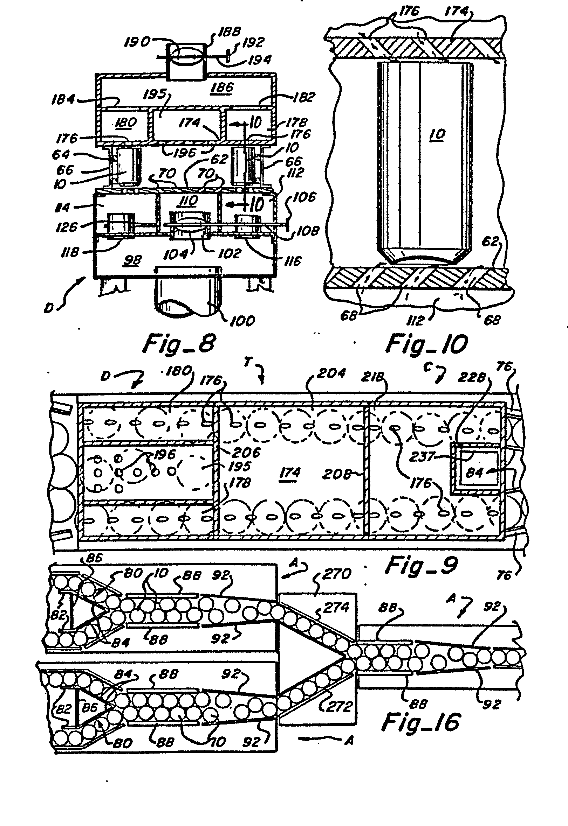

With that overview, a detailed review of the apparatus is in order. The plenum structure for the divergent zone, the transporting zone and the convergent zone are best shown in Figures 6,8 and 9. A master plenum 98 extends under these three zones and is substantially contiguous therewith and has a plurality of plenum sections between it and table surface 62 as will now be described. The master plenum is supplied with air through an air inlet 100. The flow of air from the master plenum to the plenum sections is controlled by a series of dampers. For example, air is supplied to divergent jets 70 through an inlet 102 controlled by a damper 104 connected to a control knob 106 by a rod 108. The plenum section 110 corresponds in size to the surface area over which divergent jets 70 are located. Thus, the flow and pressure of air can be independently controlled to this section of the apparatus. Static air pressure of 3386.39 to 5079.58 $N/m^2$ Hg (1.0" to 1.5") in plenum section 110 has been found to be satisfactory.

Similarly, outside plenum sections 112 and 114 are each provided with a duct 116 and 118, respectively, communicating with master plenum 98. Each duct is provided with a baffle 120 and 122, respectively, operated by a control knob 124 off of a common control rod 126. In this manner, the volume of air passing through driving jets 68 and the pressure within plenum sections 112 and 114 can be uniformly controlled. It has been found that a static pressure of about 5080 $N/m^2$ Hg (1.5") is satisfactory.

A second centre plenum section 130 has a width substantially equal to that of centre plenum section 110, but extends the remaining length of the plenum so as to be under flotation jets 74 to the downstream end. Air is supplied to this plenum section through a duct 132 which has a baffle 134 controlled by a knob 136, connected thereto by rod 138. A static pressure

14

of about 5080 N/m$^2$ Hg (1.5") has been found satisfactory in this plenum section. Outside plenum sections 140 and 142 are provided on either side of plenum section 130 within the transporting zone. These plenum sections supply air to the driving jets 68 in this zone of the apparatus. Air is supplied to these plenum sections through ducts 144 and 146, respectively. The ducts have baffles 148 and 150, respectively, operated by control knob 152 through a control rod 154. It is important that these driving jets drive the containers with substantial force to hold them in contacting relationship. Therefore, these plenum sections are supplied with air at approximately 16931 N/m$^2$ Hg (5.0") static pressure.

Downstream of plenum sections 140 and 142 and within converging zone C are another pair of plenum sections 156 and 158 which also supply air to driving jets 68. The air to these plenum zones is supplied through ducts 160 and 162, respectively. Each duct has a baffle 164 and 166, respectively connected to a control knob 168 which operates the baffles through a control rod 170. The static pressure in these plenum sections need only be 5080 N/m$^2$ Hg (1.5").

Upper plenums are also provided over the respective zones. The upper plenum sections are formed over an imperforate cover 174 which has a row of driving jets 176 on each side spaced over the rows of driving jets 68 in table surface 62. These jets are angled forwardly at an angle of approximately 45$^\circ$ and are 4.76 mm in diameter. Within the diverging zone, plenum sections 178 and 180 are formed over driving jets 176. These plenum sections each have an opening 182 and 184, respectively communicating them with a supply plenum 186 which receives air from an air supply through duct 188. The supply of air is controlled by a baffle 190 connected to a control knob 192 by a rod 194. Thus, the same amount of air at the same volume can be provided to driving jets 176 within divergent zone D. It has been found that a pressure of approximately 4064 $N/m^2$ Hg (1.2") is satisfactory. Above divergent jets 70 and between plenum sections 178 and 180 is an exhaust plenum 195 having openings 196 through cover 174. More openings are provided at the upstream end of exhaust plenum 175 so the pressure will be lowest at the upstream end. The exhaust duct has a baffle 198 controlled by control knob 200 through rod 202. This allows precise control of the air pressure in the centre of the divergent zone and thereby allows control of the number of containers moving into the divergent zone from the infeed table I.

In the transporting zone T a plenum section 204 is defined by dividers 206 and 208 extending transversely within the plenum structure, as shown. Air is supplied to plenum section 204 through a duct 210 having a baffle 212 controlled by control knob 214 connected thereto through a rod 216. Air from this plenum is supplied to the driving jets 176 in this section and is supplied at a static pressure of approximately 8466 $N/m^2$ Hg (2.5"). It will be understood that the driving jets 176 are used to maintain the containers 10 in a substantially vertical position so that the bottom driving jets 68 operate at maximum efficiency in lifting, supporting and moving the containers downstream.

A third upper plenum section 218 is provided in the converging zone. Air is provided to this section through a duct 220 having a baffle 222 operated by control knob 224 through control rod 226. Plenum section 218 provides air to driving jets 176. It has been found that a static pressure of 3386.39 $N/m^2$ Hg (1.0") is satisfactory for maintaining the containers in vertical position during this portion of travel.

The central portion of the single filer is pressurized by air introduced through a housing 228 at the downstream end of the converging zone. Air is introduced into this housing through duct 230 having a control baffle 232 operated by a control knob 234 connected through rod 236. The air exits housing 228 through an opening 237 into the area defined by side baffles 82 and cross baffle 86. This air comes in at high volume but at low velocity and at a static pressure of 677 to 1354 $N/m^2$ Hg (0.20" to 0.40"). Thus, a differential pressure exists which decreases from baffle device 80 to exhaust duct 197 so that containers which may move into this central section will move upstream toward the lower pressure in the opposite direction of the movement of the rows of containers.

Although several plenums have been described for supplying air to driving jets 176, in some applications a single plenum for all jets may be satisfactory.

The alignment zone can best be understood by referring to Figures 11,12 and 13 in conjunction with Figure 7. As previously described, the slightly converging guide rails 88 bring the merged and nested rows of containers into equilateral triangular configuration in the nesting sections. As the containers move beyond the ends of guide rails 88 in the downstream direction, they move into a high pressure buffer section created by converging sidewalls 92 and imperforate cover 238. This high pressure area causes the containers to separate from each other and the wider spacing of the sidewalls 92 with respect to guides 88 provides additional room for lateral separation, as best seen in Figure 13. Thus, at the upstream end of the buffer section the containers become separated due to the high pressure and are no longer in edge to edge contact. As the containers continue to be moved downstream by acceleration jets 94 they will be merged together by the sidewalls until they come into single file relationship. The air for acceleration jets 94 is supplied from plenum 239, which in turn is supplied by air through inlet 240. Because of the spacing between the containers, their highly etched surfaces are out of contact during merging. The spacing provides a buffer so that any momentary upstream movement of the single file row of containers caused by the arms of the decorator 96 engaging the individual cans will not be transmitted upstream to the containers in the rest of the apparatus. As can best be seen by viewing Figure 12, the upper edge 241 of each sidewall 92 tapers downwardly away from top cover 238 to provide side openings of ever increasing size so that the air from acceleration jets 94 can escape to reduce the pressure in the downstream direction and assist the movement of the containers toward the single file position.

It should be understood that the foregoing pressures, jet sizes and angles are suitable for 340 gram aluminium cans. It will be apparent to one skilled in the art that suitable changes in the described dimensions and pressures will be required for containers of different sizes and made of different materials. Also, the containers can be handled with the open end either up or down.

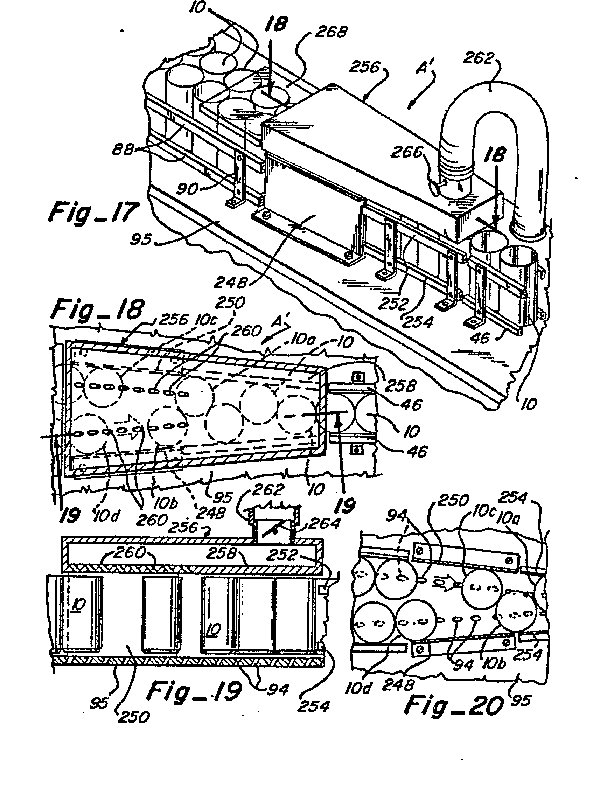

Another feature of this apparatus is its ability to eject any tipped cans which come into it from infeed table I. As seen in Figures 14 and 15, if a container 10' is tipped over on its side, the high air pressure at the centre of the section, as well as divergent jets 70 will cause the can to roll over to the side rails and be rolled up over the lower rail 64 to be discharged off the side of the apparatus into a receptacle (not shown).

The apparatus which has been described is very versatile and can be used in its entirety, in segments or in multiples in order to accomplish different results. For example, after the containers pass through the divergent zone, the transporting zone and into the converging zone, rather than being converged, the separate rows of containers can be fed directly to different apparatus, such as a line of internal coaters and sprayers. If the apparatus which one row of containers is feeding should become inoperable or interrupted for a period of time, the movement of the other row of containers will not be affected. Thus, a continuous supply of cans in single file row can be provided to multiple locations.

Conversely, the apparatus of this invention can be combined in multiple units as shown in Figure 16. By this arrangement, the single file output at the end can be doubled from what is available from either of the single filers. As viewed in Figure 16, it can be seen that the output of containers from two separate alignment zones can be directed into a converging unit 242 which has converging pathways 244 and 246 for bringing the containers into a third alignment zone wherein the separate rows of containers will be merged and arranged in single file as previously described.

In alternative alignment zone A', as shown in Figures 16,17 and 18 the buffer zone has convergent sides, such as convergent imperforate sidewalls 248 and 250 (Figure 18) which extend from the upstream end of the buffer zone toward the downstream end. The downstream end of the buffer zone is completed by spaced side rails 252 and 254. The buffer zone also includes an upper plenum 256 which includes a bottom wall 258 which is generally imperforate and acts as a cover over the buffer zone. This bottom wall or cover includes a plurality of jet openings 260 which are arranged in rows parallel to the sidewalls thereof and are spaced directly above jet openings 94 in the table surface 95. These openings assist with the acceleration of the containers and help to maintain them in an upright condition as they are accelerated. The upper plenum 256 is supplied with air through a supply tube 262 which may be connected to lower plenum 239 and includes a damper 264 controlled by control knob 266. Conveniently, a cover member 268 is provided upstream of plenum 256 to create a high pressure area between the containers to separate them as they move into the buffer zone.

A careful study of Figures 18 and 20 will provide an understanding of the self-valving action that takes place in the buffer zone. As will be apparent, imperforate sidewalls 248 and 250 as well as generally imperforate cover 258 serve as a means for creating and maintaining a high pressure area in this portion of the device. Air is supplied under pressure to the buffer zone by jets 94 and 260. Thus, some separation between the containers will occur in this area as shown in Figure 18. It will be apparent that the most downstream containers 10a and 10b effectively seal off the downstream end of the buffer zone so that high pressure is maintained therein, and these containers are separated from upstream containers 10c and 10d. However, as container 10a moves downstream it will move out of contact with the downstream edge of sidewall 250 momentarily relieving the pressure in the buffer zone. This will cause container 10c to move from its upstream position to a new downstream position as shown in Figure 20. Now container 10b will be the most downstream container forming an effective seal to maintain the high pressure in the buffer zone. However, as container 10b moves downstream out of contact with the downstream edge of sidewall 248, the air pressure will drop within the buffer zone and container 10d will move downstream into a contiguous position with container 10c. This alternating movement of the containers through the buffer zone will continue as movement of the downstream containers permits.

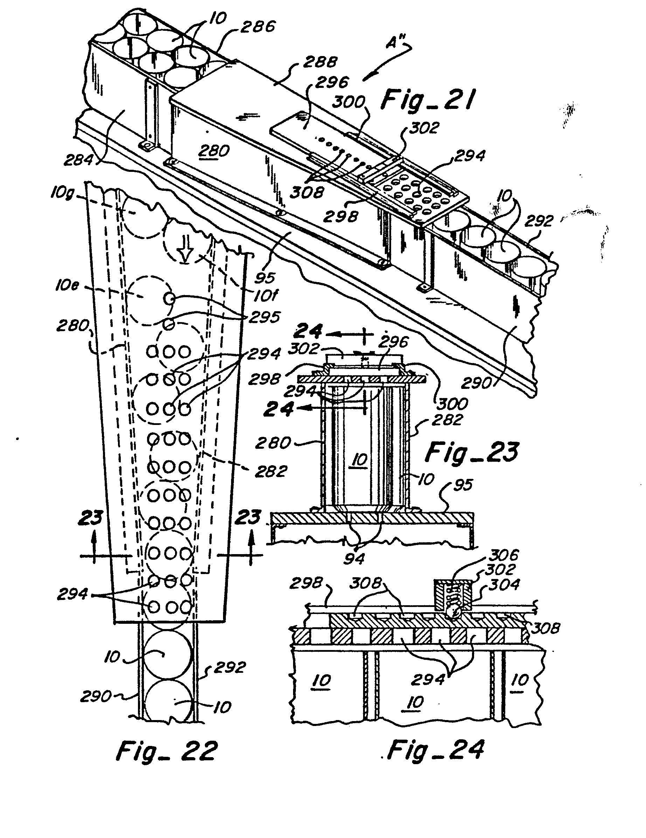

In a further alternative alignment zone A'', as shown in Figures 21 to 24, the buffer zone has convergent sides, such as convergent imperforate sidewalls 280 and 282, which extend from the upstream end of the buffer zone toward the downstream end. These sidewalls are mounted on table surface 95 which includes acceleration jets 94, as seen in Figure 23. The containers 10 are supplied in a pair of nested rows from the upstream end between imperforate sidewalls 284 and 286. The buffer zone is provided with top cover 288, which extends downstream beyond convergent walls 280 and 282 above the single file zone which is defined by imperforate sidewalls 290 and 292.

Conveniently, top cover 288 is provided with a plurality of longitudinal rows of apertures 294 which allow for progressive escape of the high pressure air created in the buffer zone by the imperforate sidewalls and imperforate upstream portion of the top cover. A slidable lid 296 is mounted on cover 288. This lid is mounted between guides 298 and 300 on either side of apertures 294, so that the lid can be slid downstream to cover the apertures or upstream to expose the apertures. An additional row of apertures 295 can be provided upstream of the other apertures to provide slower release of the high pressure, as described below. Apertures 295 may be smaller in diameter than apertures 294.

So that the sliding lid may be positively positioned in any selected position, a cross bar 302 extends between guides 298 and 300 and has a spring detent in the form of a ball 304 which is urged downwardly by coil spring 306, so as to engage any one of a series of longitudinal depressions 308 formed along the longitudinal center line of slidable lid 296.

The operation of this buffer zone can best be understood by looking at Figure 22. As container 10e moves downstream, it will progressively uncover small apertures 295. As this occurs, the high pressure developed between container 10e and containers 10f and

10g will be progressively decreased. This will allow container 10f to move downstream and it in turn will again block apertures 295 to rebuild the static air pressure upstream. As it moves further downstream, it will again relieve apertures 295 so that the air pressure progressively decreases to permit container 10g to move downstream. As will be apparent, with this embodiment, the release of air pressure is slower than would be the case in the prior embodiments, and therefore a smoother movement of the containers through the buffer zone can be accomplished. As the containers move past apertures 294, the pressure will be relieved at a higher rate because of the larger number of apertures.

As can be appreciated, when the apparatus is running at relatively low container speeds, the cover will be closed so that only a few of the downstream apertures 294 are open. Thus, the pressure will be released slowly. This is important because at low speeds the number of cubic metres per minute created by air jets 94 is less than it will be at higher speeds, and therefore in order to maintain the appropriate air pressure with a low number of cubic metres per minute, the relieving of that air pressure by the containers as they move through the buffer zone must be slower. However, at high speeds, a higher flow rate is provided and a greater static air pressure is developed within the buffer zone and the sliding lid must be further open to relieve the air pressure more rapidly as the containers pass by the apertures 294 and 295.

It has been found that when it is desired to run the containers at a speed of 1,000 per minute, a static pressure of 6772.78N/m$^2$Hg (2 inches) is satisfactory. The operation of the device is enhanced by making the inside surfaces of converging sidewalls 280 and 282 as smooth as possible. This can be accomplished by polishing or by coating the inside surface with a material having a low coefficient of friction, such as Teflon.

From the foregoing, it can be seen that the movement of the containers from the upstream end of the buffer zone to the downstream thereof is strictly controlled by the downstream movement of the single file containers. In other words, when the containers are backed up to the buffer zone an air space will be maintained between the containers at the downstream end of the buffer zone and the containers at the upstream end thereof providing a shock absorber space so that any momentary upstream movement of the single file row of containers will not be transmitted upstream to the multiple rows of containers. However, at whatever rate the single file row moves downstream then the upstream multiple rows of containers will also move downstream as the valving action permits.

Another feature of this apparatus is its ability to eject any tipped cans which come into it from infeed table I. As seen in Figures 14 and 15, if a container 10' is tipped over on its side, the high air pressure at the center of the divergent section, as well as divergent jets 70 will cause the can to roll over to the side rails and be rolled up over the lower rail 64 to be discharged off the side of the apparatus into a receptacle (not shown).

The apparatus which has been described is very versatile and can be used in its entirety, in segments or in multiples in order to accomplish different results. For example, after the containers pass through the divergent zone, the transporting zone and into the converging zone, rather than being converged, the separate rows of containers can be fed directly to different apparatus, such as a line of internal coaters and sprayers. If the apparatus which one row of containers is feeding should become inoperable or interrupted for a period of time, the movement of the other row of containers will not be affected. Thus, a continuous supply of cans in single file row can be provided to multiple locations.

From the foregoing, the advantages of this invention are readily apparent. Highly etched containers can be moved from a mass into single file at speeds heretofore not possible. The principal upon which this is accomplished is to separate the containers from each other when they are to be broken down into a smaller width mass and then move that mass as a unit to a subsequent station where they are separated from each other and further merged until lthey are finally brought into single file. This is accomplished by using diverging jets to separate the containers into separate rows wherein the rows and an imperforate cover form a high pressure zone between the containers. A differential pressure is provided which is higher at the downstream end of this central area so that any containers that move into the central area will also move upstream toward the mass of containers for recirculating into the rows. The two rows of containers are brought into nesting relationship and finally into an equilateral triangular configuration in which adjacent containers are in contacting relationship whereupon they are moved into a high pressure area and separated by means of acceleration jets in the high pressure zone and converged by converging sidewalls into single file.

The buffer zones disclosed in the various embodiments provide a means for cushioning the upstream containers from the downstream single file containers so that any momentary reverse movement caused to the single file row of containers, as by another piece of equipment working on the containers will be isolated from the converging devices provided upstream for bringing the containers into single file arrangement. In one form, the buffer zone relieves pressure in a valving action caused by the sequential movement of the containers passed an ever increasing opening in the sidewalls. In another embodiment, the containers moved past a vertical edge of an imperforate sidewall which sequentially and incrementally relieves pressure. In a still further embodiment, pressure is slowly released through apertures in an otherwise imperforate top cover as the containers move past the apertures sequentially to release progressively the static pressure between that container and the next upstream container.

This invention has been described in detail with reference to a particular embodiment thereof, but it will be understood that various other modifications can be effected within the scope of the appended claims.

## CLAIMS

1.    A shock absorbant single filer for the transport of upright, cylindrical articles (10) from a multiple row arrangement at an upstream location to a single file arrangement at a downstream location and providing a shock absorbant buffer zone (A) between the upstream location and the downstream location, the single filer being characterized by a table (95) extending from said upstream location to said downstream location, having a surface, side edges and an underside with a prearranged pattern of flotation air jets (94), the air jets being arranged in rows spaced laterally inward from the side edges, slanted in a downstream direction and communicating the surface and the underside of the table, a plenum connectable to a source of air under pressure and attached to the underside of the table surface, means (284,286) at the upstream location for supplying articles to the buffer zone in two contiguous nested rows wherein the containers form an equilateral triangular configuration with the surfaces of all adjacent articles in contact with each other, converging imperforate side walls (248,250 or 280,282) extending along said table through at least a part of the buffer zone to reduce the articles from a two article width at the upstream location to single file adjacent the downstream location, cover means (256,288) over the buffer zone serving to create a high pressure area within the buffer zone to facilitate separation of the articles (10) therein, means (294) for selectively decreasing the air pressure from a point spaced downstream from the upstream location to the downstream location, and acceleration jets (94), in the table (95) along said buffer zone for accelerating the articles so that they can be converged by the side walls into single file as they are re-arranged from the contiguous triangular configuration.

2. Apparatus as claimed in claim 1 characterized in that the high pressure within said buffer zone (A) isolates the articles at the upstream location from any movement of the articles at the downstream location in a reverse upstream direction due to sequential engagement of the single file row of articles by apparatus performing additional work on the articles.

3. Apparatus as claimed in claim 1 or claim 2, characterized in that the means for selectively decreasing air pressure includes means for decreasing air pressure at an increasing rate from said point spaced downstream from said upstream location to said downstream location.

4. Adpparatus as claimed in claim 3, characterized in that said means for decreasing air pressure at an increasing rate includes tapering said imperforate side walls (280,282) downwardly from the point spaced downstream from the upstream location to the downstream location to form a triangular opening of increasing area in the downstream direction between the upper edge of said side walls and said cover means to permit air to escape.

5. Apparatus as claimed in claim 1, characterized in that said means for selectively decreasing air pressure includes valve means for alternately relieving and re-establishing pressure at the downstream end of the buffer zone to cause an article to move from the upstream end of the buffer zone to the downstream end of the buffer zone each time the pressure in said buffer zone is relieved.

6. Apparatus as claimed in claim 5, characterized in that said valve means includes a pair of said articles (10) at the downstream end of said buffer zone (A) which are contiguous with each other and with the sidewalls (250,252) with one article being more downstream than the other and which sequentially move out of the buffer zone and into single file, and in that each such article relieves the air pressure within the buffer zone temporarily until another article moves from the upstream end of the buffer zone to the downstream end of the buffer zone to form a second contiguous pair with the remaining downstream article.

7. Apparatus as claimed in claim 1, characterized in that said cover means (256) extends downstream from the buffer zone to the downstream location.

8. Apparatus as claimed in claim 7, characterized in that the cover means includes an upper plenum (256) having a bottom wall (258) over the buffer zone, and upper, acceleration jets (260) in the bottom wall above the acceleration jets (94) in the table (95).

9. Apparatus as claim in any one of claims 1 to 6, characterized by an imperforate member (268) provided upstream of said cover means serving to generate a high pressure to separate the articles (10).

10. Apparatus as claimed in any one of claims 1 to 6, characterized in that the cover (288) is generally impervious to the passage of air and the means for selectively decreasing air pressure includes spaced apertures (294) in the cover adjacent the downstream end thereof.

11.    Apparatus as claimed claim 10, characterized in that the spaced apertures (294) decrease in open area in the upstream direction.

12.    Apparatus as claimed in claim 10, characterized in that at least some of the spaced apertures (294) are smaller upstream than downstream.

13.    Apparatus as claimed in claim 10, characterized in that the apertures (294) are arranged in longitudinal parallel rows with at least one of the rows extending further upstream than other said rows.

14.    Apparatus as claimed in claim 10, characterized in that said cover and said apertures (294) extend over the downstream single file location.

15.    Apparatus as claimed in claim 10, characterized by a slidable lid (296) on the cover (288) which is adjustably movable from the upstream end to the downstream end cover to selectively at least some of said apertures (294).

16.    Apparatus as claimed in claim 15, characterized by detent means (304,306) for holding the lid (296) in any one of a plurality of selected positions.

17.    A method of isolating a multiple row arrangement of upright cylindrical articles at an upstream location from a single file arrangement of the articles at a downstream location, said method being characterized by the steps of providing an air table (95) between the upstream and downstream location having a surface, converging side edges to converge the articles from multiple rows to less than two article widths, and an underside with a prearranged pattern of flotation air jets (94) in rows spaced laterally inward from the side edges and slanted in a downstream direction and communicating the surface and the underside of the table, confining the air along the side edges of the table and above the table to create an air buffer zone (A) having higher than ambient air pressure to separate the multiple rows of articles from the single file row of articles, sequentially discharging the articles from the downstream end of the air table (95) momentarily to relieve the air pressure in the air buffer zone to permit another article to move to the downstream end of the air table to form an air barrier and again raise the air pressure in the air buffer zone.

18.    A method, as claimed in claim 17, characterized in that the step of sequentially discharging includes progressively relieving the pressure at an increasing rate to provide a progressive decrease in static air pressure in the air buffer zone.

19.    A method, as claimed in claim 17 or claim 18, characterized by the further step of converging the articles into single file as they are separated and move through the buffer zone.

Fig_1

Fig_2

Fig_3

0246001

Fig_5

Fig_4

3/8

Fig_6

4/8

Fig—7

Fig_8

Fig_10

Fig_9

Fig_16

Fig_13

Fig_15

Fig_14

Fig_12

Fig_11

0246001

Fig_17

Fig_18

Fig_19

Fig_20

8/8

Fig_21

Fig_22

Fig_23

Fig_24